# EUROPEAN PATENT APPLICATION

(11) **EP 1 004 235 A2**
(43) Date of publication of application: **31.05.2000**
(21) Application number: 99309482.0
(22) Date of filing: 26.11.1999
(51) Int. Cl.: A01G 9/10

(54) **Improved tray for plant pots**

(30) Priority: 26.11.1998 GB 9825771
(71) Applicant: APAC Rowena Limited, Rothley, Leicestershire LE7 7NL (GB)
(72) Inventor: Carpenter, David Martin, LE12 8TJ Leicestershire (GB)
(74) Representative: Stagg, Diana Christine

(57) **Abstract**

A tray assembly (10) comprises a base section (2) in the shape of an open box, characterised in that the tray assembly (10) further comprises an insert (4). The insert (4) is a substantially flat sheet provided with one or more apertures (30), each of which apertures (30) is adapted to receive a plant pot, and is adapted to locate in the base section (2). The base section (2) is provided with one or more support members (18) to support the insert (4), and retaining means (22) are provided to retain the insert (4) in the base section (2).

The tray assembly is designed for the storage, transport and delivery of articles such as pot plants and is of the type which is designed for use in particular to transport plants from the grower or nursery to a retailer, in particular to a supermarket.

## Description

The present invention relates to an improved tray for the storage, transport and delivery of articles such as pot plants. The trays are of the type which are designed for use in particular to transport plants from the grower or nursery to a retailer, in particular to a supermarket.

It is known to transport articles such as pot plants in moulded plastic trays, which trays comprise an array of support recesses, each of which is adapted to receive a single plant pot and to hold it during transport. Plant pots are made in a variety of sizes and shapes and it is therefore necessary to provide a large number of differently configured plant pot trays in order to be able to transport the full range of plant pots. This makes it necessary for the grower to maintain a large inventory of trays. While trays of one particular configuration are designed to stack with other trays of the same configuration, it is not usually possible to stack trays of differing configurations in the same stack. It is increasingly becoming a requirement, for environmental reasons, for traders either to reuse packaging materials or, where this is not possible, for them to return the materials to their suppliers for recycling. It is therefore necessary for the retailer to sort the used trays into the different models, to maintain a stack of each model of tray and to return them to the supplier when a sufficient number have been sorted. Since there are more than fifty sizes of trays required in order to accommodate the plant pots in common use, this is a significant burden on the retailer.

In addition, the increasing mechanisation and standardisation in retailing has led to the almost universal use of standard sized trolleys to transport stock from storage areas to display areas. It is therefore a requirement of transport and storage trays for items such as pot plants that they are sized to fit on a standard trolley.

It is an object of the present invention to provide a tray assembly suitable for the storage, transport and/or delivery of articles such as pot plants.

The invention therefore provides a tray assembly which comprises a base section in the shape of an open box, characterised in that the tray assembly further comprises an insert, which insert is a substantially flat sheet provided with one or more apertures, each of which apertures is adapted to receive a plant pot, and is adapted to locate in the base section, the base section being provided with one or more support members to support the insert, and retaining means being provided to retain the insert in the base section.

In a preferred embodiment of the tray assembly according to the invention, the side and end walls of the base section are profiled to form a plurality of support pillars on which the insert can be supported. Two support pillars are preferably provided on each of the side and end walls. The base section may also be provided with one or more additional support members projecting from the base of the base section. The base section is preferably provided with retaining means to retain the insert in position on the support members. The retaining means preferably comprise hook members projecting from the side and end walls of the base section and located to cooperate with the support pillars to retain the insert in position. The open edge of the base section is preferably rolled to remove any sharp edges.

The side and end walls of the base section are preferably ribbed to provide increased strength. A part of the ribbed area may be flattened in order to provide an area to receive an adhesive label or an aperture may be provided in the base section to receive a label holder, suitably in the upper face of one or more of the support pillars, or in the rolled edge of the base section.

The insert is preferably made of cardboard or a plastics material. If it is desired that the insert should provide increased rigidity to the tray assembly, it is preferably made of cardboard. If it is desired that the insert should be reusable, then it is preferably made of a plastics material. The base of the base section is preferably provided with an array of corrugations which not only provide additional strength and rigidity but also aid in drainage of water from the plant pots, to prevent the plants from becoming water logged.

The present invention further provides a base section for a tray assembly which base section is in the shape of an open box, characterised in that the base section is adapted to receive an insert and is provided with one or more support members to support the insert, and retaining means to retain the insert in the base section.

The base of the base section is preferably further provided with drainage holes to prevent excess water collecting in the base of the tray.

In a preferred embodiment of the base section according to the invention, the side and end walls are profiled to form a plurality of support pillars on which the insert can be supported. Two support pillars are preferably provided on each of the side and end walls. The base section may also be provided with one or more additional support members projecting from the base of the base section. The base section is preferably provided with retaining means to retain the insert in position on the support members. The retaining means preferably comprise hook members projecting from the side and end walls of the base section and located to cooperate with the support pillars to retain the insert in position. The open edge of the base section is preferably rolled to remove any sharp edges.

The side and end walls of the base section are preferably ribbed to provide increased strength. A part of the ribbed area may be flattened in order to provide an area to receive an adhesive label or an aperture may be provided in the base section to receive a label holder, suitably in the upper face of one or more of the support pillars, or in the rolled edge of the base section.

A preferred embodiment of a tray assembly will now be described with reference to the accompanying drawings, in which:
Figure 1 is a perspective view of a first embodiment of a plant pot tray containing an insert to hold plant pots:
Figure 2 is a perspective view of the tray of Figure 1 with the insert removed and
Figure 3 is a section of a detailed portion of the tray of Figure 1 showing the retaining means for the insert tray.

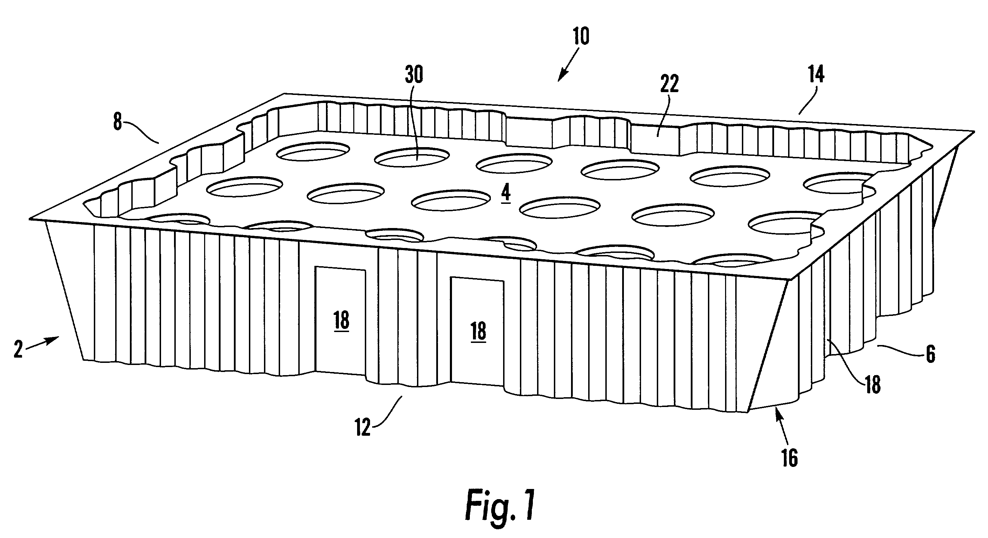

As can be seen from Figure 1, a tray assembly shown generally at 10 comprises a base section 2 and an insert 4. The base section 2 is in the form of an open box structure with two end walls 6, 8 , two side walls 12, 14 and a base 16. The end walls 6,8 and the side walls 12, 14 are provided with pillars 18 arranged around the perimeter of the base section 2. The pillars 18 extend from the base 16 and terminate in a shelf surface 20 below the level of the top of the walls 6,8,12,14. In alignment with the pillars 18, retaining latches 22 are provided in the upper part of the walls 6,8,12,14. The pillars 18 and retaining latches 22 together define slots 24 to receive the insert 4.

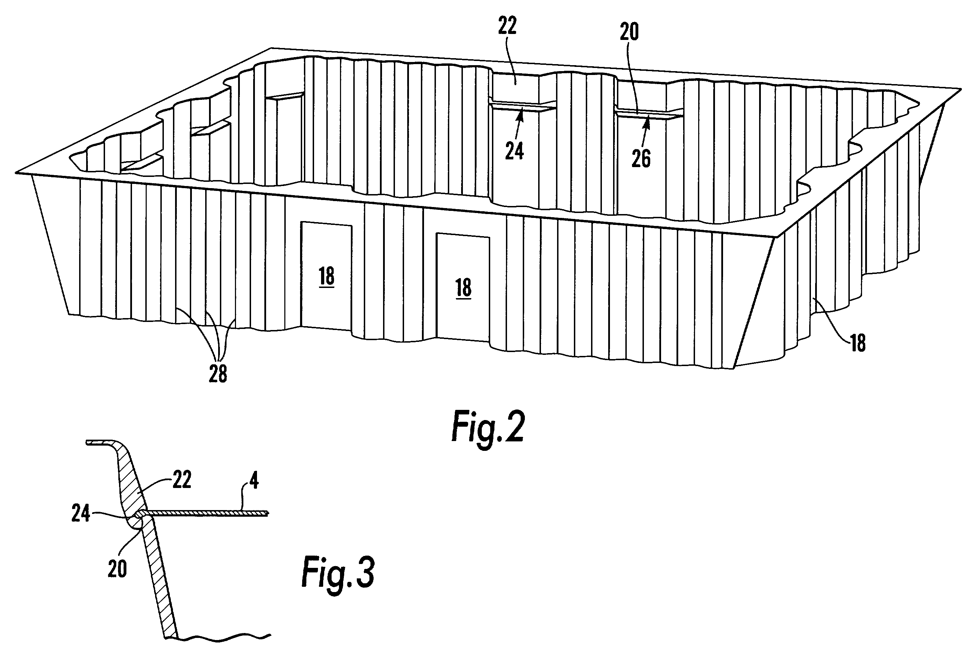

As can be seen more clearly in Figure 3, the insert 4 is retained in the slot 24 and is supported by the shelf surface 20 and restrained against upwards movement by the lower surface 26 of the latch 22. The insert 4 is formed from a resilient material, in particular a thin plastics sheet material, so that it can be flexed on insertion into the slots 24.

The end and side walls 6,8,12,14 are provided with a plurality of reinforcing ribs 28 to improve the strength and rigidity of the base section 2.

The insert 4 is provided with a plurality of holes 30 to accommodate plant pots (not shown). these holes may be round ( as shown) or square, in order to accommodate differently shaped pots.

The number and the size of the holes 30 in the insert 4 is selected depending on the size of the plant pots for which the tray assembly 10 is to be used, and it will be appreciated by the person skilled in the art that a variety of different trays, with different arrangements of holes, can be utilised with the same design of base section 2.

The base 16 may be provided with an array of grooves and/or drainage holes (not shown) to assist in drainage of the pots placed in the tray, and so to prevent waterlogging.

The tray assembly 10 is preferably sized to fit in a standard supermarket trolleys. Particularly preferred sizes are 57 x 37 x 6.5; or 55 x 25.5 x 6.5 or 7 cm, or 40 x 28 x 6.5 or 7 cm.

The tray assembly 10 is preferably made of a plastics material, and may be made by injection moulding or, more preferably, by thermoforming.

## Claims

1. A tray assembly (10) which comprises a base section (2) in the shape of an open box, characterised in that the tray assembly (10) further comprises an insert (4), which insert (4) is a substantially flat sheet provided with one or more apertures (30), each of which apertures (30) is adapted to receive a plant pot, and is adapted to locate in the base section (2), the base section (2) being provided with one or more support members (18) to support the insert (4), and retaining means (22) being provided to retain the insert (4) in the base section (2).

2. A tray assembly (10) according to claim 1 characterised in that the side and end walls (6,8, 12, 14) of the base section are profiled to form a plurality of support pillars (18) on which the insert (4) can be supported.

3. A tray assembly (10) according to claim 2 characterised in that two support pillars (18) are provided on each of the side and end walls (6,8, 12, 14).

4. A tray assembly according to claim 2 or claim 3 characterised in that the base section (2) is provided with one or more additional support members projecting from the base of the base section.

5. A tray assembly according to any of claims 1 to 4 characterised in that the base section (2) is provided with retaining means (22) to retain the insert (4) in position on the support members (18).

6. A tray assembly according to claim 2 characterised in that the retaining means (22) comprise hook members projecting from the side and end walls (6,8, 12, 14) of the base section (2) and located to cooperate with the support pillars (18) to retain the insert (4) in position.

7. A tray assembly according to any of claims 1 to 6 characterised in that the open edge of the base section (2) is rolled to remove any sharp edges.

8. A tray assembly according to any of claims 1 to 7 characterised in that the side and end walls (6,8, 12, 14) of the base section (2) are ribbed to provide increased strength.

9. A tray assembly according to claim 8 characterised in that a part of the ribbed area is flattened in order to provide an area to receive an adhesive label

10. A tray assembly according to any of claims 1 to 6 characterised in that an aperture is provided in the base section (2) to receive a label holder.

11. A tray assembly according to any of claims 1 to 10 characterised in that the insert (4) is made of cardboard or a plastics material.

12. A tray assembly according to any of claims 1 to 11 characterised in that the base of the base section (2) is provided with an array of corrugations to aid in drainage of water from the plant pots

13. A base section (2) for a tray assembly (10) which base section (2) is in the shape of an open box, characterised in that the base section(2) is adapted to receive an insert (4) and is provided with one or more support members (18) to support the insert (4), and retaining means (22) to retain the insert (4) in the base section (2).
